# EUROPEAN PATENT APPLICATION

(11) **EP 4 841 508 A1**
(43) Date of publication of application: **18.11.2026**
(21) Application number: 25300062.4
(22) Date of filing: 15.05.2025
(51) Int. Cl.: G06N 3/045, G06N 3/082, G06N 3/09, G06N 3/0985

(54) **A REUSABLE FRAMEWORK TO MEASURE THE ROBUSTNESS OF ML MODELS AGAINST LABEL NOISE WITH THE HELP OF LLMS**

(71) Applicant: ABB SCHWEIZ AG, 5400 Baden (CH)
(72) Inventor: Dix, Marcel, 78476 Allensbac (DE); Sharma, Divyasheel, 560048 Bangalore, Karnataka (IN); K R, Chandrika, 560078 Bangalore (IN); Borrison, Reuben, 68782 Brühl (DE); Nakas, Georgios, 68161 Mannheim (DE); Palacio, Sebastian, 69221 Dossenheim (DE)
(74) Representative: Maiwald GmbH

(57) **Abstract**

There is provided a method for determining an impact of label noise on a performance of machine learning, ML, models in an industrial context. The method comprises obtaining training data for training a ML model. The training data are indicative of predetermined labels comprising a predetermined label noise, and the training data are associated with an industrial plant. The method comprises obtaining a first evaluation result from applying a first variant of the ML model on evaluation data. The first variant of the ML model was trained on the training data, the evaluation data are associated with the industrial plant, and the first evaluation result is indicative of a robustness of the first variant of the ML model to make, based on the predetermined label noise, a correct determination when applied on the evaluation data. The method comprises obtaining, from a large language model, LLM, a second variant of the ML model as a result from providing the first variant of the ML model to the LLM. The method comprises obtaining a second evaluation result from applying the second variant of the ML model on the evaluation data. The second variant of the ML model was trained on the training data, and the second evaluation result is indicative of a robustness of the second variant of the ML model to make, based on the predetermined label noise, a correct determination when applied on the evaluation data. The method comprises determining the impact of label noise on the performance of a variant of the ML model based on the first evaluation result and the second evaluation result.

## Description

### FIELD OF THE INVENTION

The invention relates to a method for determining an impact of label noise on a performance of machine learning, ML, models in an industrial context. Moreover, the invention relates to a data processing apparatus, to a computer-readable medium, to a computer program product, and to a use of the method.

### BACKGROUND

Artificial Intelligence (Al) needs ground truth labels e.g. for supervised learning and often simply assumes this "truth" to exist. Such "golden labels" are only an idealization of the real world. Especially industrial data is usually not labeled. Instead, it is relied heavily on expert users in order to collect feedback if an Al model predictions seemed correct or not in their eyes. Such labels are purely subjective. Users can be wrong or have no consensus about the Al model prediction. In this real-world industrial scenario, the idea of having a single golden ground truth turns out to be rather artificial but having "noisy labels" is the more realistic situation to face. When training machine learning (ML) models such noisy labels will lead to poor model robustness, because the ML model does not know anymore what to predict in future.

There is already a research stream with prior art on the issue of label noise. For example, prior art is disclosed in the following research publications A), B) and C):
A) Simmler, N., Sager, P., Andermatt, P., Chavarriaga, R., Schilling, F. P., Rosenthal, M., & Stadelmann, T. (2021, June). A survey of un-, weakly-, and semi-supervised learning methods for noisy, missing and partial labels in industrial vision applications. In 2021 8th Swiss Conference on Data Science (SDS) (pp. 26-31). IEEE.
B) Cordeiro, F. R., & Carneiro, G. (2020, November). A survey on deep learning with noisy labels: How to train your model when you cannot trust on the annotations?. In 2020 33rd SIBGRAPI conference on graphics, patterns and images (SIBGRAPI) (pp. 9-16). IEEE.
C) Song, H., Kim, M., Park, D., Shin, Y., & Lee, J. G. (2022). Learning from noisy labels with deep neural networks: A survey. IEEE transactions on neural networks and learning systems, 34(11), 8135-8153.

A lot of that literature deals with the question how to effectively train an Al model in the presence of noisy labels, i.e. how to make model training more robust towards label noise. For this, literature suggests various best practices for defining model architectures which are more tolerant towards label noise, e.g. by incorporating a special regularization term or using a special activation function. However, how can it be measured to what extent these architectural suggestions from literature actually lead to better models?

The above-described issues highlight the need for how to determine, in particular in an industrial context, how architectural suggestions may lead to Al models with improved robustness. Hence, in an industrial context, there is the problem of how to determine how suggestions of Al model architectures may lead to Al models with improved robustness.

Hence, there is room and need for improvement.

### SUMMARY

In view of the above, it is an object of the present disclosure to overcome at least part of the identified drawbacks.

Therefore, to address one or more of these drawbacks, there is provided, in a first aspect, a method for determining an impact of label noise on a performance of machine learning (ML) models in an industrial context. The method comprises obtaining training data for training a ML model. The training data are indicative of predetermined labels comprising a predetermined label noise. The training data are associated with an industrial plant. The method further comprises obtaining a first evaluation result from applying a first variant of the ML model on evaluation data. The first variant of the ML model was trained on the training data. The evaluation data are associated with the industrial plant. The first evaluation result is indicative of a robustness of the first variant of the ML model to make, based on the predetermined label noise, a correct determination when applied on the evaluation data. The method further comprises obtaining, from a large language model (LLM), a second variant of the ML model as a result from providing the first variant of the ML model to the LLM. The method further comprises obtaining a second evaluation result from applying the second variant of the ML model on the evaluation data. The second variant of the ML model was trained on the training data. The second evaluation result is indicative of a robustness of the second variant of the ML model to make, based on the predetermined label noise, a correct determination when applied on the evaluation data. And the method further comprises determining the impact of label noise on the performance of a variant of the ML model based on the first evaluation result and the second evaluation result.

At least part of the method may be computer-implemented. Preferably the method is computer-implemented.

The training data may be data to train a ML model to determine, identify or predict whether a certain product or component that is, for example, produced or used by an industrial plant is defective. For example, the training data may comprise images that show the product or component. On some images, for example a first part of the training data, a defective product or component is shown. On some other images, for example a second part of the training data, a non-defective product or component is shown. Images of the first part of training data may be labeld as "defective", wherein images of the second part of the training data may be labelled as "non-defective". In doing so, all images would be labeled correctly, i.e. images showing a defective product or component were labeled as "defective" and images showing a non-defective product or component were labeled as "non-defective". Hence, the predetermined labels may be "defective" and "non-defective". The predetermined label noise may be zero or 0%, since all images are labeled correctly, i.e. all labels are correct. However, in case that some images of the first part of training data were labelded "non-defective" and/or in case that some images of the second part of training data were labelded "defective", then not all images would be labeled correctly. Said in other words, there were a number of images or a percentage of images that were labeled incorrectly. For example, x% of the images may be labelled incorrectly. In this case, the predetermined label noise may be x%. A maximum label noise may thus be 100%.

The evaluation data may then comprise images that were not used for the training of the ML model. Additionally or alternatively, the evaluation data may comprise all of the training data or at least part of the training data, wherein for training data (i.e. training images) the labels are removed when used as evaluation data.

The evaluation data may show the product or component, i.e. the evaluation data may comprise images that show the product or component, wherein the product or component as shown is either defective or non-defective. The ML model (for example after being trained based on the training data) may be applied on the evaluation data to determine, identify or predict whether a shown product or component is defective or non-defective. A correct determination may comprise that a defective product or component is determined as being defective and/or that a non-defective product or component is determined as being non-defective. An incorrect determination may comprise that a defective product or component is determined as being non-defective and/or that a defective product or component is determined as being non-defective. For example, the ML model may make y% correct determinations. Such y% may depend on the predetermined label noise that was included in the training data that were used to train the ML model. Said in other words, the less predetermined label noise included in the training data, the more correct determinations may be made. Similar, the more predetermined label noise included in the training data, the less correct determinations may be made. Hence, such y% may be understood as representing a robustness of the ML model against label noise. Additionally or alternatively, in case there may be a first y% achieved by the ML model for a first amount of predetermined label noise and there may be a second y% achieved by the ML model for a second amount of predetermined label noise, a difference between the first y% and the second y% may be understood as representing a robustness of the ML model against label noise. Such difference may also be understood as representing an impact of the label noise on the performance of the ML model.

The first variant of the ML model may be understood as representing a first ML model or an initial or original variant or version of the first ML model. The second variant of the ML model may be understood as representing a second ML model or a modified, updated or changed variant of the initial or original variant of the first ML model, for example. The LLM may be queried, asked or prompted to improve the first variant of the ML model to be more robust against label noise. As a result, the LLM may suggest or output the second variant of the ML model. Additionally or alternatively, the LLM suggests or outputs a modification, update or change that may be applied on the first variant of the ML model to obtain the second variant of the ML model. For example, the LLM may suggest or output one or more replacement and/or additional lines of code that may lead to a modified, updated or changed architecture of the second variant of the ML model in comparison to the first variant of the ML model.

It should be noted that, first, a number of different variants of the ML model may be obtained from the LLM. Then, second, these number of different variants of the ML model may be evaluated. Optionally, these different variants of the ML model may first be trained on same training data including the predetermined label noise.

The method according to the first aspect is advantageous in several ways. For example, there is enabled for not having to provide the expertise for searching and finding useful best practices from literature and understanding how to implement them in a given ML model. Furthermore, it is enabled to save time and effort for not having to manually implement and test various variants of the ML model. Instead, a user can request that a number of LLM-generated variants of the ML model will be tested or evaluated automatically. Moreover, a variant suggested by the LLM may be a variant that a user may not suggest or may only suggests after having tried several different variants. Hence, human resources may be saved by using LLM-based suggested variants and human resources may thus be used more efficiently for different tasks. Additionally or alternatively, it should be noted that such usage of an LLM is much more than a mere automation of the generation of different variants of the ML model. Rather, best practice knowledge, expert knowledge and/or knowledge from literature may be used and combined in a complex and efficient way to achieve variants of the ML model that may not be achievable without the usage of the LLM. Said in other words, there will be tried several variants and it will be compared their impact to being able to improve the robustness of the ML model under test. For sure, some of the generated variants may even lead to worser performance than their previous variant(s), but there may be one or a few variants that will actually improve the model robustness, i.e. the robustness of the ML model. Through the model evaluation, i.e. the evaluation of several variants of the ML model for one or more different amounts of predetermined label noise, as performed according to several examples of the present disclosure, a user can easily see and compare to what extent different model architecture best practices from the literature help to make the given ML model more robust. For this, the solution as disclosed according to several examples of the present disclosure provides a *systematic* robustness analysis which makes the robustness of models, for example of different variants of a ML model, *measurable* and *comparable.* This is of great importance, in particular in an industrial context.

According to several examples of the present disclosure, determining the impact of label noise may comprise determining the variant of the ML model that has a robustness above a predetermined lower limit robustness and/or determining the variant of the ML model that has a highest robustness. The method may further comprise applying, on the industrial plant, a variant of the ML model that has a robustness above the predetermined lower limit robustness and/or the variant of the ML model that has the highest robustness.

The predetermined lower limit robustness may be, for example, that at least a predetermined number or percentage of products or components are determined, identified or predicted correctly as being defective or non-defective. This may be related to a certain predetermined label noise. For example, for a predetermined label noise of x%, at least y% correct determinations need to be made to satisfy the predetermined lower limit robustness. The highest robustness may comprise a highest value of correctly made determinations for a certain predetermined label noise.

Application of the industrial plant may comprise that products and/or components used or output by the industrial plant are evaluated, for example whether an output component or product is defective or non-defective.

Hence, a reliability for the application of the ML model in an industrial context is increased.

According to several examples of the present disclosure, the robustness may be indicative of an absolute and/or relative amount of correct determinations. The predetermined lower limit robustness may be indicative of a lower limit absolute amount of correct determinations and/or a lower limit relative amount of correct determinations. The method may further comprise comparing the robustness of the first variant of the ML model with the robustness of the second variant of the ML model by comparing an absolute amount of correct determinations made by the first variant of the ML model with an absolute amount of correct determinations made by the second variant of the ML model, and/or by comparing a relative amount of correct determinations made by the first variant of the ML model with a relative amount of correct determinations made by the second variant of the ML model.

The comparing may be made for a certain predetermined label noise.

Hence, a reliability for the application of the ML model in an industrial context is even further increased.

According to several examples of the present disclosure, providing the first variant of the ML model to the LLM may comprise providing a neural network, NN, model architecture of the first variant of the ML model to the LLM.

Thus, the LLM may suggest changes to the NN model architecture.

Hence, more substantive changes may be made to the first variant of the ML model. Thus, greater improvements may be achieved.

According to several examples of the present disclosure, providing the first variant of the ML model to the LLM may comprise quarrying the LLM to propose one or more changes to the first variant of the ML model for achieving a variant of the ML model that has a robustness higher than the robustness of the first variant of the ML model when applied on the evaluation data. The one or more changes may comprise to change regularization terms and/or to change an activation function and/or to change a number of network layers.

Hence, the first variant of the ML model may be changed in several ways. Thus, greater improvements may be achieved.

According to several examples of the present disclosure, obtaining the second variant of the ML model may comprise obtaining a changed variant of the first variant of the ML model, wherein at the changed variant of the ML model in comparison to the first variant of the ML model different regularization terms and/or a different activation function and/or a different number of network layers are used.

Hence, a "well-running" first variant of the ML model may be used as a basis for achieving an even further improved and thus "better-running" second variant of the ML model.

According to several examples of the present disclosure, obtaining the second variant of the ML model may comprise obtaining the second variant of the ML model by making use of LLM-based code generation for generating, by the LLM, code associated with the second variant of the ML model based on code associated with the first variant of the ML model.

Hence, code or lines of code generated by the LLM may be used to change the first variant of the ML model, i.e. to change the code or source code underlying the first variant of the ML model. Hence, more substantive changes may be made to the first variant of the ML model. Thus, greater improvements may be achieved.

According to several examples of the present disclosure, obtaining, from the LLM, the second variant of the ML model as a result from providing the first variant of the ML model to the LLM may further comprise obtaining, from the LLM, a third variant of the ML model as a result from providing the first variant; and/or wherein the method may further comprise obtaining, from the LLM, a fourth variant of the ML model as a result from providing the second variant of the ML model to the LLM.

Said in other words, the LLM may provide several suggestions or changes based on one initial ML model. Additionally or alternatively, the LLM may provide a suggestion or change based on an already changed variant of the ML model.

Hence, different approaches may be used to achieve a potential best-working, i.e. most robust variant of the ML model.

According to several examples of the present disclosure, the method may further comprise obtaining a third evaluation result from applying the third variant of the ML model on the evaluation data and/or obtaining a fourth evaluation result from applying the fourth variant of the ML model on the evaluation data. The third variant of the ML model was trained on the training data. The fourth variant of the ML model was trained on the training data. The third evaluation result is indicative of a robustness of the third variant of the ML model to make, based on the predetermined label noise, a correct determination when applied on the evaluation data. The fourth evaluation result is indicative of a robustness of the fourth variant of the ML model to make, based on the predetermined label noise, a correct determination when applied on the evaluation data. The method may further comprise determining the impact of label noise on the performance of a variant of the ML model further based on the third evaluation result and/or the fourth evaluation result.

Said in other words, the method may be repeated for newly generated variants of the ML model.

Hence, the effect of different changes may be evaluated to achieve a potential best-working, i.e. most robust variant of the ML model.

According to several examples of the present disclosure, the training data may be first training data. The predetermined label noise may be a first label noise. The method may be an iterative method that further comprises:
- obtaining second training data for training variants of the ML model, wherein the second training data are indicative of the predetermined labels comprising a second label noise; and
- repeating the obtainment of evaluation results for variants of the ML model based on the second training data. Determining the impact of label noise may further be based on the evaluation results obtained from the repeating.

Said in other words, the method may be repeated for different amounts of predetermined label noise.

Hence, the effect or impact of label noise may be analysed in detail for several variants of the ML model. Thus, different approaches may be used to achieve a potential best-working, i.e. most robust variant of the ML model.

According to several examples of the present disclosure, the predetermined label noise may be 0% and may comprise that all predetermined labels are labelled correctly, or the predetermined label noise may be x% with x being larger than 0 and may comprise that x% of the predetermined labels are labelled incorrectly.

Hence, robust variants of the ML model may even be achievable for highly noisy labels, i.e. for predetermined label noise that may be above a predetermined label noise level, for example above 20% (i.e. more than 20% of the labels are labeled incorrectly).

According to a second aspect, there is provided a data processing apparatus. The data processing apparatus comprises one or more processors being configured to carry out the method of the first aspect.

According to a third aspect, there is provided a data processing system. The data processing system comprising an apparatus of the second aspect. Additionally or alternatively, the data processing system comprises means for carrying out the method of the first aspect.

According to a fourth aspect, there is provided an industrial plant comprising an apparatus of the second aspect. Additionally or alternatively, the industrial plant comprises a data processing system of the third aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

According to a seventh aspect, there is provided a use of at least one of a data processing apparatus of the second aspect, a data processing system of the third aspect, an industrial plant of the fourth aspect, a computer-readable medium of the fifth aspect, and a computer program product of the sixth aspect.

In particular, according to several examples of the present disclosure, there is provided a use for determining an impact of label noise on a performance of machine learning, ML, models in an industrial context according to the method of the first aspect.

Each of the second aspect to the seventh aspect is advantageous in several ways. For example, there is enabled for not having to provide the expertise for searching and finding useful best practices from literature and understanding how to implement them in a given ML model. Furthermore, it is enabled to save time and effort for not having to manually implement and test various variants of the ML model. Instead, a user can request that a number of LLM-generated variants of the ML model will be tested or evaluated automatically. Moreover, a variant suggested by the LLM may be a variant that a user may not suggest or may only suggests after having tried several different variants. Hence, human resources may be saved by using LLM-based suggested variants and human resources may thus be used more efficiently for different tasks. Additionally or alternatively, it should be noted that such usage of an LLM is much more than a mere automation of the generation of different variants of the ML model. Rather, best practice knowledge, expert knowledge and/or knowledge from literature may be used and combined in a complex and efficient way to achieve variants of the ML model that may not be achievable without the usage of the LLM. Said in other words, there will be tried several variants and it will be compared their impact to being able to improve the robustness of the ML model under test. For sure, some of the generated variants may even lead to worser performance than their previous variant(s), but there may be one or a few variants that will actually improve the model robustness, i.e. the robustness of the ML model. Through the model evaluation, i.e. the evaluation of several variants of the ML model for one or more different amounts of predetermined label noise, as performed according to several examples of the present disclosure, a user can easily see and compare to what extent different model architecture best practices from the literature help to make the given ML model more robust. For this, the solution as disclosed according to several examples of the present disclosure provides *a systematic* robustness analysis which makes the robustness of models, for example of different variants of a ML model, *measurable* and *comparable.* This is of great importance, in particular in an industrial context.

Optional features of the first aspect may form part of any of the second aspect to the seventh aspect, mutatis mutandis.

The computer-readable medium of the fifth aspect may have stored thereon the computer program product of the sixth aspect.

The term "obtaining", as used herein, may comprise, for example, receiving from another system, apparatus, device, Al or process; receiving via an interaction with a user; loading or retrieving from storage or memory; measuring or capturing using sensors or other data acquisition devices, receiving or acquiring as a result from one or more data processing steps.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The present specification may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates an example for a possible analysis result from a framework as disclosed according to several examples of the present disclosure;
- Figure 2 illustrates basic components of the framework as disclosed according to several examples of the present disclosure;
- Figure 3 illustrates a flow chart indicative of a method according to several examples of the present disclosure; and
- Figure 4 illustrates a block diagram schematically showing a data processing apparatus according to several examples of the present disclosure.

### DETAILED DESCRIPTION

According to several examples of the present disclosure, there is described a generic reusable framework for measuring the impact of label noise on the performance of machine learning (ML) models with the help of large language models (LLMs).

In more detail, according to several examples of the present disclosure, there is disclosed a generic reusable framework for measuring the impact of label noise on the performance of ML models with the help of LLMs. The analysis may be performed by the framework by taking a given ML model description, e.g. a neural network model architecture, and comparing how changes to this ML model, e.g. by using different regularization terms and/or activation function, will impact the robustness of that ML model to label noise. The changes may be achieved with help of an LLM, where the ML model is given to the LLM asking to propose possible changes that could help improving the robustness to label noise.

To then test the resulting model change against label noise or predetermined label noise, the framework may be used as follows. Namely, the analysis may run in several iterations, where in each iteration more and more noise may be added to the given ground truth labels. Ground truth labels may be labels that include zero or no label noise. This may be done with the help of label perturbation. In each iteration the impact of the added label noise on a performance of the ML model, i.e. on model performance may be measured. Noise may not be added randomly but based on the model performance from previous iterations of the analysis, in order to simulate wrong user feedback in situations where the model prediction, i.e. the determination, identification or prediction made by the ML model, may have appeared ambiguous or uncertain to the user. A wrong user feedback may comprise that an image which shows a non-defective product produced by an industrial plant is labeled by the user to show a defective product (or that an image which shows a defective product produced by an industrial plant is labeled by the user to show a non-defective product).

However, in addition in that only the robustness of a single ML model to label noise is analyzed, it may be automized according to several examples of the present disclosure the comparing of different ML models against robust learning best practices, thereby making use of LLM-based code generation for example.

According to several examples of the present disclosure, benefits of the disclosure is to not having to provide the expertise for searching and finding useful best practices from literature and understanding how to implement them in the given ML model. Furthermore, to save the time and effort for not having to manually implement and test various ML model variants, i.e. variants of a ML model. Instead, the user can, for example, request the ML model to run a predetermined number of LLM-generated variants in a predetermined time period. The system will try several variants and compare their impact to being able to improve the robustness of the ML model under test. For sure, some of the variants that the system will try may even lead to worser performance, but there may be one or a few variants that will actually improve the model robustness. Through the model evaluation performed by the system, the user can easily see and compare to what extent different model architecture best practices from the literature help to make the given model more robust. For this, the proposed system provides a *systematic* robustness analysis which makes the robustness of models *measurable* and *comparable.*

It should be noted that several publications have addressed the relevance of label noise in ML in recent years, including for example six surveys in M. Goswami, V. Sanil, A. Choudhry, A. Srinivasan, C. Udompanyawit, and A. Dubrawski, "Aqua: A benchmarking tool for label quality assessment," Advances Neural Information Processing Systems, vol. 36, 2024. One of the primary research questions has been how models can be made more robust to label noise. Song et al. (H. Song, M. Kim, D. Park, Y. Shin, and J.-G. Lee, "Learning from noisy labels with deep neural networks: A survey," IEEE Transactions Neural Networks Learning Systems, vol. 34, no. 11, pp. 8135-8153, 2022) for example identified over 60 techniques, which they categorized into five strategies for improving model robustness, comprising for example one or more of: robust architecture, robust regularization, robust loss function, robust loss adjustment, and sample selection. Given this wide range of approaches recorded in the literature, data scientists face the challenge of identifying the most effective strategy that aligns best with their purpose, data, and ML model. However, despite the large number of robustness methods available, literature still lacks generic solutions for testing their effectiveness (as outlined for example in M. Goswami, V. Sanil, A. Choudhry, A. Srinivasan, C. Udompanyawit, and A. Dubrawski, "Aqua: A benchmarking tool for label quality assessment," Advances Neural Information Processing Systems, vol. 36, 2024). Said in other words, this raises the problem: which strategy works best for a specific ML model, as every ML model reacts differently to label noise? In the prior art, only systematic testing could answer this question. According to several examples of the present disclosure, a solution to this problem is provided.

In more detail, according to several examples of the present disclosure, to address this limitation, the present disclosure provides a model-agnostic, reusable framework for testing the robustness of supervised ML models against label noise. The disclosed solution builds on the foundation of the model robustness framework presented in M. Dix, G. Manca, K. C. Okafor, R. Borrison, K. Kirchheim, D. Sharma, K. Chandrika, D. Maduskar, and F. Ortmeier, "Measuring the robustness of ml models against data quality issues in industrial time series data," in IEEE 21st Int. Conf. Industrial Informatics, pp. 1-8, 2023. While the framework disclosed in Dix et al. had its focus on testing ML model robustness to quality issues in the input data, e.g. sensor signal noise, the framework as disclosed herein according to several examples of the present disclosure expands such earlier work significantly to include the assessment of model robustness against label noise.

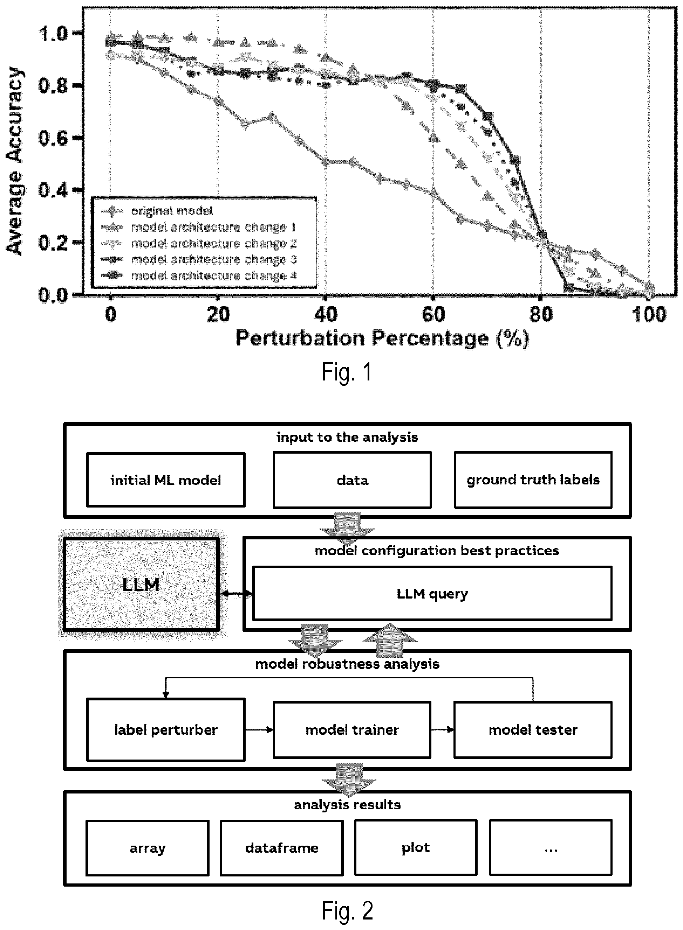

According to several examples of the present disclosure, it is not only analyzed the robustness of a single ML model to label noise. Rather, it is automized the comparing of different ML models against robust learning best practices, making use of LLM-based code generation. This makes the implementation of various architecture best practices to a given ML model much easier. For example, a specific use case of the framework may be to allow data scientists to compare the robustness of different models to label noise. A result could look as shown in Figure 1. In particular, Figure 1 illustrates an example for a possible analysis result from a framework as disclosed according to several examples of the present disclosure.

As shown in Figure 1, an original model is considered and four different variants, i.e. model architecture change 1 to 4, are additionally considered. An average accuracy (for example over a predetermined number of evaluations, like to be evaluated defective or non-defective products shown on images, for example) is drawn over a perturbation percentage, i.e. an amount of predetermined label noise for example. For a predetermined label noise of zero, i.e. of 0% (ground truth labels for example), each variant of the ML model variants achieves its best, i.e. highest accuracy. Then, as the predetermined label noise increases, the achieved average accuracy decreases. For each variant, a predetermined label noise of 100% results in an accuracy of (almost) 0%. However, in a range between a predetermined label noise of 0% to 40%, the model architecture change 1 achieves the best results, i.e. the highest average accuracy. For example, for a perturbation percentage of 20%, the average accuracy for the model architecture change 1 is the highest and is approximately between 0.9 and 1.0. Whereas for the perturbation percentage of 20%, the average accuracy for the original model is the worst, i.e. the lowest and is approximately between 0.7 and 0.8.

In more detail, in this example as shown in Figure 1, a user has run the disclosed framework or method five times, using the original model and comparing it to 4 possible architectural changes, e.g. architecture best practices taken for example from Song et al. For this, the user would have to first manually implement those changes in a given ML model, e.g., to try a different regularization technique, to try a different activation function, to add/remove network layers in order to increase/reduce its complexity, and so on, for example. For this, the user has to search and find the best practices from literature and understand how to implement them in the given ML model. Finally, the user has to rerun the framework for each ML model change to test its impact to label noise.

According to several examples of the present disclosure, the disclosed solution allows to make use of LLMs to prompt the LLM to automatically generate the code how a given ML model can be changed to improve its robustness to label noise. Then, in a next step, the framework or method takes this resulting changed ML model from the LLM and tests it again against label noise. The result of this second experiment can then be directly compared to the original model performance, as shown in Figure 1 for example. As also shown in Figure 1, more experiments can be run and compared in the analysis by the framework.

According to several examples of the present disclosure, literature proposes various so-called prompting strategies in LLMs. Here, the disclosed framework or method is not limited to a specific strategy but could follow different strategies. For example, a simple, i.e. zero-shot prompting for example, query to the LLM could be made in the following form:
"I have the following neural network {autoencoder python code}. Please propose an example how this model could be made more robust to label noise."

A strategy "Retrieval-Augmented Generation" that gives more context to the domain of label noise could look as follows:
"I have the following neural network {autoencoder python code}. I would like to explore so-called 'robust regularization' best practices from literature how to change this model to make it more robust to label noise. Please propose an example."

A strategy may be also to build on the results from the previous model changes, as opposed to the strategy to simply ask for, and test, several independent model changes. For example:
"The previous change did not help, please propose another change." Or "The previous change already helped, please build on this and propose a further change".

To then test the resulting ML model change against label noise, the framework or method is used. The basic components of the proposed solution are presented in Figure 2. Figure 2 illustrates basic components of the framework as disclosed according to several examples of the present disclosure.

For example, the framework takes as input the initial ML model or initial ML model definition that a user wants to test. This can be e.g. the defined neural network architecture such as a standard autoencoder. For statistical models in sklearn the model would be the selected and untrained model class.

The user may also define the given data for training and testing the ML model along with the corresponding ground truth labels. The labels may be the assumed golden ground truth labels without label noise, i.e. a predetermined label noise of 0%.

The basic working of the label noise analysis may be in three steps as follows:
1) In the first step, a label perturber adds some noise to the given labels, i.e. the predetermined label noise is increased, for example a first (or initial) predetermined label noise is increased to a second predetermined label noise.
2) In the second step, the given (or initial) ML model is trained using the training data and the perturbed labels.
3) In the third step, the performance of the ML model, i.e. the model performance is tested, but against the original unperturbed labels. The original unperturbed labels may be understood as representing evaluation data.

This workflow may be repeated in iterations, gradually increasing a degree of label noise for example, starting from zero label perturbation for example, which would correspond to measuring the model performance when there is no label noise at all using the golden labels, and adding more and more label noise with each iteration, while observing how the model performance decreases.

To compare the analysis results to how various techniques and best practices with regard to the given ML model configuration would improve the model robustness to label noise, the LLM query now comes into play according to several examples of the present disclosure. This step asks an LLM to suggest a ML model which may be more robust to label noise, and to do so, different query strategies can be applied as described above. Defining a strategy is a feature of the framework. Also defining how many changes shall be explored until the analysis shall end is a feature of the framework.

Hence, according to several examples of the present disclosure, there is provided a framework for measuring the impact of label noise on the performance of ML models. The proposed framework is designed to run the analysis for several ML models to compare the robustness of these ML models. The disclosed framework may make use of an LLM to automatically generate the code for alternative ML models (i.e. different variants of the ML model) that shall be compared to the original given ML model. The disclosed framework may follow different LLM query strategies, such as simply asking the LLM for suggestions, zero-shot query, or to indicate more context e.g. to chose from specific robust learning best practices from literature, or to build on previous query results, other strategies.

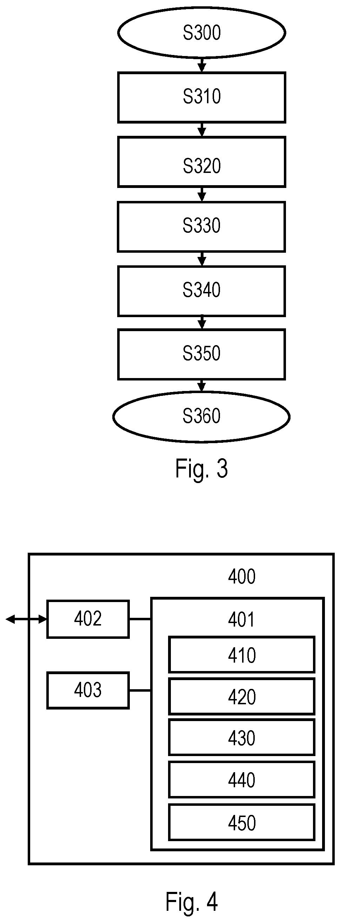

Referring now to Figure 3, Figure 3 illustrates a flowchart indicative of a method according to several examples of the present disclosure. The method is for determining an impact of label noise on a performance of ML models in an industrial context. The method may correspond to such framework as outlined above with reference to Figure 2.

The method starts in S300.

In S310, the method comprises obtaining training data for training a ML model. The training data are indicative of predetermined labels comprising a predetermined label noise. The training data are associated with an industrial plant. The ML model may correspond to such initial ML model as illustrated with reference to Figure 2 and/or the ML model may correspond to one of the ML models outlined with reference to Figure 1. The training data may correspond to such data as illustrated with reference to Figure 2, wherein the predetermined labels comprising the predetermined label noise may correspond to such ground truth labels as illustrated with reference to Figure 2.

In S320, the method comprises obtaining a first evaluation result from applying a first variant of the ML model on evaluation data. The first variant of the ML model was trained on the training data. The evaluation data are associated with the industrial plant. The first evaluation result is indicative of a robustness of the first variant of the ML model to make, based on the predetermined label noise, a correct determination when applied on the evaluation data. For example, the first variant of the ML model may be such original model as outlined with reference to Figure 1 or may be such model architecture change 1 as outlined with reference to Figure 1. The applying of the first variant of the ML model on the evaluation data may correspond to and/or may comprise at least part of such model robustness analysis as illustrated with reference to Figure 2. For example, based on the predetermined label noise, i.e. for a certain label perturbation, the first variant of the ML model may be trained by the model trainer and may then be tested by the model tester on the evaluation data to obtain the first evaluation result. The first evaluation result may then be evaluated or analysed in the section analysis results as illustrated with reference to Figure 2.

In S330, the method comprises obtaining, from an LLM, a second variant of the ML model as a result from providing the first variant of the ML model to the LLM. The LLM may be such LLM as illustrated with reference to Figure 2. The providing may correspond to such LLM query as illustrated with reference to Figure 2. The second variant of the ML model may be one of such model architecture changes 1 to 4 as outlined with reference to Figure 1.

In S340, the method comprises obtaining, second evaluation result from applying the second variant of the ML model on the evaluation data. The second variant of the ML model was trained on the training data. The second evaluation result is indicative of a robustness of the second variant of the ML model to make, based on the predetermined label noise, a correct determination when applied on the evaluation data. S340 may be similar to S320 wherein the first variant of the ML model is replaced by the second variant of the ML model. Hence, the second evaluation result may be obtained similar to the first evaluation result.

In S350, the method comprises determining the impact of label noise on the performance of a variant of the ML model based on the first evaluation result and the second evaluation result. The determining may correspond to such analysis results as illustrated with reference to Figure 2. The determining may comprise such diagram as illustrated with reference to Figure 1 and the determination of the impact may comprise the evaluation of the plots as shown in Figure 1.

The method ends in S360.

According to several examples of the present disclosure, determining the impact of label noise may comprise determining the variant of the ML model that has a robustness above a predetermined lower limit robustness and/or determining the variant of the ML model that has a highest robustness. The method may further comprise applying, on the industrial plant, a variant of the ML model that has a robustness above the predetermined lower limit robustness and/or the variant of the ML model that has the highest robustness.

For example, with reference to Figure 1, the predetermined lower limit robustness may correspond to an average accuracy of at least 0.8 for a perturbation percentage of 20%.

According to several examples of the present disclosure, the robustness may be indicative of an absolute and/or relative amount of correct determinations. The predetermined lower limit robustness may be indicative of a lower limit absolute amount of correct determinations and/or a lower limit relative amount of correct determinations. The method may further comprise comparing the robustness of the first variant of the ML model with the robustness of the second variant of the ML model by comparing an absolute amount of correct determinations made by the first variant of the ML model with an absolute amount of correct determinations made by the second variant of the ML model, and/or by comparing a relative amount of correct determinations made by the first variant of the ML model with a relative amount of correct determinations made by the second variant of the ML model.

The absolute and/or relative amount of correct determinations may correspond to and/or may comprise such average accuracy as outlined with reference to Figure 1, wherein an average accuracy of 1.0 may indicate an average accuracy of 100% and wherein an average accuracy of 0.0 may indicate an average accuracy of 0%. The comparing the robustness of the first variant of the ML model with the robustness of the second variant of the ML model may comprise to compare the differences between two plots as shown in Figure 1.

According to several examples of the present disclosure, providing the first variant of the ML model to the LLM may comprise providing a neural network, NN, model architecture of the first variant of the ML model to the LLM.

According to several examples of the present disclosure, providing the first variant of the ML model to the LLM may comprise quarrying the LLM to propose one or more changes to the first variant of the ML model for achieving a variant of the ML model that has a robustness higher than the robustness of the first variant of the ML model when applied on the evaluation data. The one or more changes may comprise to change regularization terms and/or to change an activation function and/or to change a number of network layers.

Examples for querying, instructing or prompting the LLM are outlined above with reference to Figure 2.

According to several examples of the present disclosure, obtaining the second variant of the ML model may comprise obtaining a changed variant of the first variant of the ML model, wherein at the changed variant of the ML model in comparison to the first variant of the ML model different regularization terms and/or a different activation function and/or a different number of network layers are used.

According to several examples of the present disclosure, obtaining the second variant of the ML model may comprise obtaining the second variant of the ML model by making use of LLM-based code generation for generating, by the LLM, code associated with the second variant of the ML model based on code associated with the first variant of the ML model.

According to several examples of the present disclosure, obtaining, from the LLM, the second variant of the ML model as a result from providing the first variant of the ML model to the LLM may further comprise obtaining, from the LLM, a third variant of the ML model as a result from providing the first variant; and/or wherein the method may further comprise obtaining, from the LLM, a fourth variant of the ML model as a result from providing the second variant of the ML model to the LLM.

The first variant of the ML model may correspond to the original model as shown in Figure 1, wherein the second to fourth variants of the ML model may correspond to the model architecture changes 1 to 3 as shown in Figure 1.

According to several examples of the present disclosure, the method may further comprise obtaining a third evaluation result from applying the third variant of the ML model on the evaluation data and/or obtaining a fourth evaluation result from applying the fourth variant of the ML model on the evaluation data. The third variant of the ML model was trained on the training data. The fourth variant of the ML model was trained on the training data. The third evaluation result is indicative of a robustness of the third variant of the ML model to make, based on the predetermined label noise, a correct determination when applied on the evaluation data. The fourth evaluation result is indicative of a robustness of the fourth variant of the ML model to make, based on the predetermined label noise, a correct determination when applied on the evaluation data. The method may further comprise determining the impact of label noise on the performance of a variant of the ML model further based on the third evaluation result and/or the fourth evaluation result.

The evaluation results may be indicative and/or may be represented as such plots as shown in Figure 1. In particular, the evaluation results may be indicative and/or may be represented as certain values or points for a certain perturbation percentage as shown in Figure 1.

According to several examples of the present disclosure, the training data may be first training data. The predetermined label noise may be a first label noise. The method may be an iterative method that further comprises:
- obtaining second training data for training variants of the ML model, wherein the second training data are indicative of the predetermined labels comprising a second label noise; and
- repeating the obtainment of evaluation results for variants of the ML model based on the second training data. Determining the impact of label noise may further be based on the evaluation results obtained from the repeating.

The consideration of different amounts of predetermined label noise may correspond to the consideration of different perturbation percentages as shown in Figure 1. It shall be noted that one ML model may be evaluated or tested for several values of predetermined label noise. This may be repeated for another ML model. Additionally or alternatively, several ML models may be evaluated or tested for one amount of predetermined label noise. Thus, said in other words, there is no strict order of processing steps of how the evaluation is to be performed.

According to several examples of the present disclosure, the predetermined label noise may be 0% and may comprise that all predetermined labels are labelled correctly, or the predetermined label noise may be x% with x being larger than 0 and may comprise that x% of the predetermined labels are labelled incorrectly.

Different values or amounts of predetermined label noise are indicated as x-axis in the diagram of Figure 1.

Referring now to Figure 4, Figure 4 shows a block diagram schematically illustrating a data processing apparatus 400 according to several examples of the present disclosure. In particular, there is provided an apparatus 400 for determining an impact of label noise on a performance of ML models in an industrial context. The apparatus 400 comprises one or more processors 401 being configured to carry out the framework as outlined above with reference to Figure 2 and/or the method as outlined above with reference to Figure 3. The apparatus 400 may comprise means to obtain or generate such diagram as illustrated in Figure 1.

In more detail, according to various examples, the apparatus 400 being configured to carry out the method of Figure 3 may comprise a processing circuitry, a processing function, a processing means, a processing unit or a processor 401, which enables the apparatus 400 to participate in enabling for determining an impact of label noise on a performance of ML models in an industrial context. The processor 401 may comprise one or more processing portions or functions, wherein the processing portions or functions may be provided as one or more physical or virtual entities. The apparatus 400 may comprise one or more communication interfaces 402. The apparatus 400 may further comprise a memory or memory unit 403 for storing data, programs and/or instructions to be executed by the processor. The memory 403 may be a memory internal to the apparatus 400 or may be a memory external to the apparatus 400, for example at a cloud server. The processor 401 may comprise one or more portions, which enable the apparatus 400 to execute the method of Figure 3 for example. According to several examples of the present disclosure, an obtaining portion 410 may be configured to perform such obtaining according to S310 of Figure 3, an obtaining portion 420 may be configured to perform such obtaining according to S320 of Figure 3, an obtaining portion 430 may be configured to perform such obtaining according to S330 of Figure 3, an obtaining portion 440 may be configured to perform such obtaining according to S340 of Figure 3, and a determining portion 450 may be configured to perform such determining according to S350 of Figure 3.

According to several examples of the present disclosure, the respective portions of the apparatus 400 may also be understood as means for carrying out the certain function.

According to several examples of the present disclosure, there is provided a data processing system for determining an impact of label noise on a performance of ML models in an industrial context. The data processing system comprises the apparatus 400 according to Figure 4. Additionally or alternatively, the data processing system comprises means for carrying out the method according to Figure 3. The data processing system may comprise or correspond to such framework as illustrated with reference to Figure 2.

According to several examples of the present disclosure, there is provided an industrial plant comprising the apparatus 400 according to Figure 4 and/or the data processing system as outlined above. The industrial plant may be the industrial plant on which a certain product is produced, wherein a state (defective or non-defective for example) of such products is determined, identified or predicted by using a ML model as selected based on the method according to Figure 3 and/or based on the framework according to Figure 2.

According to several examples of the present disclosure, there is provided a computer-readable medium comprising instructions which, when executed by a computing system, causes the computing system to perform the method as outlined with reference to Figure 3. The computer-readable medium may be transitory or non-transitory, volatile or non-volatile.

According to several examples of the present disclosure, there is provided a computer program product comprising instructions which, when executed by a computing system, enable or cause the computing system to perform the method as outlined with reference to Figure 3. The computer program product may comprise a computer-readable medium comprising instructions of the computer program product. The computer-readable medium as mentioned above may have stored thereon the computer program product.

According to several examples of the present disclosure, there is provided a use of at least one of the apparatus 400, the data processing system as outlined above, the industrial plant as outlined above, the computer-readable medium as outlined above, and the computer program product as outlined above. In particular, there is provided use of the framework as outlined with reference to Figure 2 and/or the method as outlined with reference to Figure 3 to enable determining an impact of label noise on a performance of ML models in an industrial context.

Optional features of the framework and/or method as outlined with reference to Figure 2 and/or 3 may form part of the apparatus 400, the data processing system, the industrial plant, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to devices. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the specification has been illustrated and described in detail in the drawings and foregoing description, such illustration and description are to be considered exemplary and not restrictive. The specification is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for determining an impact of label noise on a performance of machine learning, ML, models in an industrial context, wherein the method comprises:
- obtaining (S310) training data for training a ML model,
• wherein the training data are indicative of predetermined labels comprising a predetermined label noise, and
• wherein the training data are associated with an industrial plant;
- obtaining (S320) a first evaluation result from applying a first variant of the ML model on evaluation data,
• wherein the first variant of the ML model was trained on the training data,
• wherein the evaluation data are associated with the industrial plant, and
• wherein the first evaluation result is indicative of a robustness of the first variant of the ML model to make, based on the predetermined label noise, a correct determination when applied on the evaluation data;
- obtaining (S330), from a large language model, LLM, a second variant of the ML model as a result from providing the first variant of the ML model to the LLM;
- obtaining (S340) a second evaluation result from applying the second variant of the ML model on the evaluation data,
• wherein the second variant of the ML model was trained on the training data, and
• wherein the second evaluation result is indicative of a robustness of the second variant of the ML model to make, based on the predetermined label noise, a correct determination when applied on the evaluation data; and
- determining (S350) the impact of label noise on the performance of a variant of the ML model based on the first evaluation result and the second evaluation result.

2. The method according to claim 1,
wherein determining the impact of label noise comprises determining the variant of the ML model that has a robustness above a predetermined lower limit robustness and/or determining the variant of the ML model that has a highest robustness, wherein the method further comprises applying, on the industrial plant, a variant of the ML model that has a robustness above the predetermined lower limit robustness and/or the variant of the ML model that has the highest robustness.

3. The method according to claim 1 or 2,
wherein the robustness is indicative of an absolute and/or relative amount of correct determinations;
wherein the predetermined lower limit robustness is indicative of a lower limit absolute amount of correct determinations and/or a lower limit relative amount of correct determinations;
wherein the method further comprises comparing the robustness of the first variant of the ML model with the robustness of the second variant of the ML model by
comparing an absolute amount of correct determinations made by the first variant of the ML model with an absolute amount of correct determinations made by the second variant of the ML model, and/or
comparing a relative amount of correct determinations made by the first variant of the ML model with a relative amount of correct determinations made by the second variant of the ML model.

4. The method according to any of claims 1 to 3, wherein providing the first variant of the ML model to the LLM comprises providing a neural network, NN, model architecture of the first variant of the ML model to the LLM.

5. The method according to any of claims 1 to 4,
wherein providing the first variant of the ML model to the LLM comprises quarrying the LLM to propose one or more changes to the first variant of the ML model for achieving a variant of the ML model that has a robustness higher than the robustness of the first variant of the ML model when applied on the evaluation data,
wherein the one or more changes comprise to change regularization terms and/or to change an activation function and/or to change a number of network layers.

6. The method according to any of claims 1 to 5, wherein obtaining the second variant of the ML model comprises obtaining a changed variant of the first variant of the ML model, wherein at the changed variant of the ML model in comparison to the first variant of the ML model different regularization terms and/or a different activation function and/or a different number of network layers are used.

7. The method according to any of claims 1 to 6, wherein obtaining the second variant of the ML model comprises obtaining the second variant of the ML model by making use of LLM-based code generation for generating, by the LLM, code associated with the second variant of the ML model based on code associated with the first variant of the ML model.

8. The method according to any of claims 1 to 7,
wherein obtaining, from the LLM, the second variant of the ML model as a result from providing the first variant of the ML model to the LLM further comprises obtaining, from the LLM, a third variant of the ML model as a result from providing the first variant; and/or
wherein the method further comprises obtaining, from the LLM, a fourth variant of the ML model as a result from providing the second variant of the ML model to the LLM.

9. The method according to claim 8, wherein the method further comprises
obtaining a third evaluation result from applying the third variant of the ML model on the evaluation data and/or obtaining a fourth evaluation result from applying the fourth variant of the ML model on the evaluation data,
• wherein the third variant of the ML model was trained on the training data,
• wherein the fourth variant of the ML model was trained on the training data,
• wherein the third evaluation result is indicative of a robustness of the third variant of the ML model to make, based on the predetermined label noise, a correct determination when applied on the evaluation data,
• wherein the fourth evaluation result is indicative of a robustness of the fourth variant of the ML model to make, based on the predetermined label noise, a correct determination when applied on the evaluation data; and
- determining the impact of label noise on the performance of a variant of the ML model further based on the third evaluation result and/or the fourth evaluation result.

10. The method according to any of claims 1 to 9,
wherein the training data are first training data,
wherein the predetermined label noise is a first label noise, and
wherein the method is an iterative method that further comprises:
obtaining second training data for training variants of the ML model, wherein the second training data are indicative of the predetermined labels comprising a second label noise; and
repeating the obtainment of evaluation results for variants of the ML model based on the second training data, wherein
determining the impact of label noise is further based on the evaluation results obtained from the repeating.

11. The method according to any of claims 1 to 10,
wherein the predetermined label noise is 0% and comprises that all predetermined labels are labelled correctly, or
wherein the predetermined label noise is x% with x being larger than 0 and comprises that x% of the predetermined labels are labelled incorrectly.

12. A data processing apparatus (400) comprising one or more processors being configured to carry out the method according to any of claims 1 to 11.

13. A computer program product comprising instructions which, when executed by a computing system, enable and/or cause the computing system to perform the method according to any of claims 1 to 11.

14. A computer-readable medium having stored thereon the computer program product according to claim 13.

15. Use of the method according to any of claims 1 to 11 for selecting a ML model to determine a state of products produced by the industrial plant, wherein product data associated with the products represent the evaluation data and wherein the ML model to be selected has a highest robustness and/or a robustness above a predetermined lower limit robustness when applied on the product data to determine a state of the products.
